# EUROPEAN PATENT APPLICATION

(11) **EP 2 592 730 A1**
(43) Date of publication of application: **15.05.2013**
(21) Application number: 11803638.3
(22) Date of filing: 06.07.2011
(51) Int. Cl.: H02K 17/16, H02K 15/02

(54) **CAGE ROTOR, AND CAGE ROTOR MANUFACTURING METHOD**

(30) Priority: 08.07.2010 JP 2010156068
(71) Applicant: NHK Spring Co., Ltd., Kanagawa 236-0004 (JP)
(72) Inventor: HANAMACHI, Toshihiko, Isehara-shi Kanagawa 259-1126 (JP)
(74) Representative: HOFFMANN EITLE
(86) International application number: PCT/JP2011/065506
(87) International publication number: WO 2012/005304

(57) **Abstract**

A squirrel-cage rotor 1 according to the present invention includes a rotor core 2 made by stacking a plurality of cores made of steel plates and having a plurality of slots 7 extending in parallel to each other, rotor bars 5 respectively inserted into the plurality of slots 7, the rotor bars 5 being made of metal and having lengths longer than the lengths of the slots inserted, two end rings 3, 4 respectively provided at end portions of the rotor core 2 and both end portions in a direction in which the plurality of slots 7 extend, the two end rings 3, 4 short-circuiting the plurality of rotor bars 5, wherein the end rings 3, 4 are formed by blowing, to the end portions, metal material powder in a solid state constituting the end rings 3, 4 at a temperature lower than a melting point of the metal material powder using heated compressed gas.

## Description

### Field

The present invention relates to a squirrel-cage rotor and a manufacturing method of a squirrel-cage rotor. Background

Conventionally a technique for fixing a rotor core to a mold, filling the mold with molten metal which is a material for a rotor bar and an end ring, and integrally forming the rotor bar and the end ring with casting is known as a technique for manufacturing a squirrel-cage rotor (see Patent Literature 1). A technique for inserting many rotor bars to the rotor core and thereafter manufacturing the rotor bars and end rings by welding the rotor bars and the end rings or brazing the rotor bars and the end rings is also known as a technique for manufacturing a squirrel-cage rotor (see Patent Literature 2 or 3).

### Citation List

### Patent Literature

Patent Literature 1: Japanese Patent Laid-open No. 2005-12907
Patent Literature 2: Japanese Patent Laid-open No. 2007-202235
Patent Literature 3: Japanese Patent Laid-open No. 2002-335659

### Summary

### Technical Problem

However, when a rotor is manufactured with casting as described in Patent Literature 1, casting failure may occur due to, e.g., air inclusion and internal gases during the casting.

As described in Patent Literature 2 and 3, when the rotor bars and the end rings are welded or blazed and assembled, it takes a lot of time because there are many portions to be welded or blazed, and the strength may be reduced and electrical failure may occur due to the heat and sink marks made during bonding.

The present invention is made in view of the above problem, and it is an object of the present invention to provide a squirrel-cage rotor and a manufacturing method of a squirrel-cage rotor capable of preventing occurrence of, e.g., internal defect and reduction of strength and reducing the time it takes to manufacture the squirrel-cage rotor.

### Solution to Problem

To solve the problem described above and achieve the object, a squirrel-cage rotor according to the present invention includes: a rotor core made by stacking a plurality of cores made of steel plates and having a plurality of slots extending in parallel to each other; a plurality of rotor bars respectively inserted into the plurality of slots, the rotor bars being made of metal and having lengths longer than the lengths of the slots inserted; and two end rings respectively provided at end portions of the rotor core and both end portions in a direction in which the plurality of slots extend, the two end rings short-circuiting the plurality of rotor bars, wherein the end rings are formed by blowing, to the end portions, metal material powder in a solid state constituting the end rings at a temperature lower than a melting point of the metal material powder using heated compressed gas.

In the squirrel-cage rotor according to the present invention as set forth in the invention described above, the end portions of the plurality of rotor bars are buried in an inside of the end rings.

In the squirrel-cage rotor according to the present invention as set forth in the invention described above, the end rings are made of aluminum, aluminum alloy, copper, or copper alloy.

In the squirrel-cage rotor according to the present invention as set forth in the invention described above, the end rings are made of copper or copper alloy including alumina, tungsten, or zirconium as a dispersion material.

In a manufacturing method of a squirrel-cage rotor including a rotor core made by stacking a plurality of cores made of steel plates and having a plurality of slots extending in parallel to each other, a plurality of rotor bars respectively inserted into the plurality of slots, the rotor bars being made of metal and having lengths longer than the lengths of the slots inserted, and two end rings respectively provided at end portions of the rotor core and both end portions in a direction in which the plurality of slots extend, the two end rings short-circuiting the plurality of rotor bars according to the present invention, the end rings are formed by blowing, to the end portions, metal material powder in a solid state constituting the end rings at a temperature lower than a melting point of the metal material powder using heated compressed gas.

In the squirrel-cage rotor according to the present invention as set forth in the invention described above, the end rings are formed by blowing, to the end portions of the rotor core, the metal material powder in the solid state constituting the end rings at a temperature lower than the melting point of the metal material powder using heated compressed gas, so that the end portions of the plurality of rotor bars are buried.

### Advantageous Effects of Invention

In the squirrel-cage rotor according to the present invention, an end ring is formed by blowing mental material powder in a solid state constituting the end ring to an end portion of the rotor core at a temperature lower than a melting point of the metal material powder using a heated compressed gas, so that there is an advantage in that the squirrel-cage rotor according to the present invention can be manufactured in a short time without causing internal defect and reduction of the strength due to heat generated during bonding.

### Brief Description of Drawings

FIG. 1 is a perspective view illustrating a configuration of a squirrel-cage rotor according to an embodiment of the present invention.
FIG. 2 is a longitudinal cross-sectional view illustrating the squirrel-cage rotor of FIG. 1.
FIG. 3 is a flowchart illustrating a manufacturing method of the squirrel-cage rotor according to an embodiment of the present invention.
FIG. 4 is a cross sectional view illustrating a step of manufacturing the squirrel-cage rotor according to an embodiment of the present invention.
Fig. 5 is cross sectional view illustrating a step of manufacturing the squirrel-cage rotor according to an embodiment of the present invention.
FIG. 6 is a cross sectional view illustrating a step of manufacturing the squirrel-cage rotor according to an embodiment of the present invention.
FIG. 7 is an explanatory diagram illustrating overview of a thermal spraying device used to manufacture the squirrel-cage rotor according to an embodiment of the present invention.
FIG. 8 is a perspective view illustrating a configuration of the squirrel-cage rotor according to a modification of the present invention.
FIG. 9 is a longitudinal cross-sectional view illustrating a squirrel-cage rotor of FIG. 8.

### Description of Embodiment

Hereinafter, an embodiment of a squirrel-cage rotor according to the present invention will be explained in detail with reference to drawings. It should be noted that the present invention is not limited to the embodiment, and can be changed in various manners without deviating from the gist of the present invention.

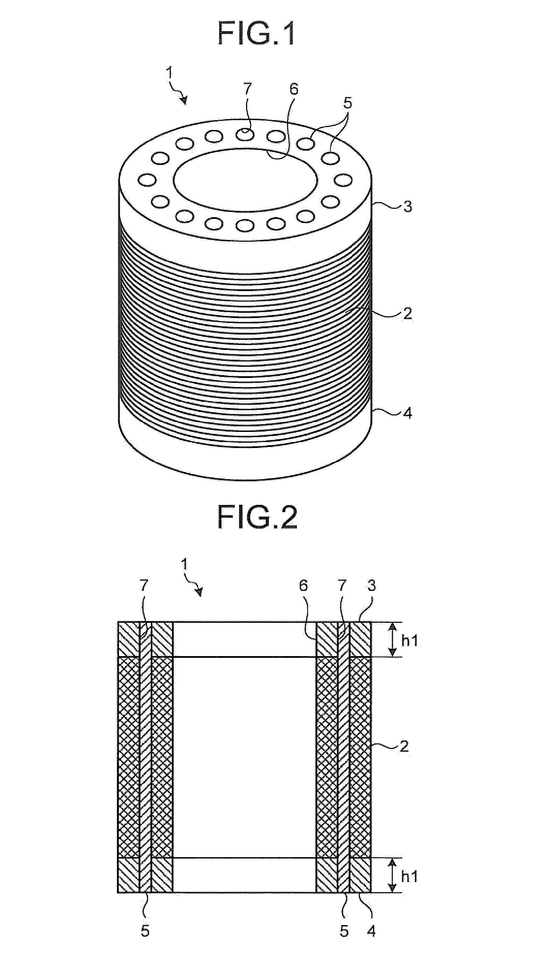

FIG. 1 is a perspective view illustrating a configuration of a squirrel-cage rotor 1 according to an embodiment of the present invention. FIG. 2 is a longitudinal cross-sectional view illustrating the squirrel-cage rotor 1 of FIG. 1. The squirrel-cage rotor 1 includes a rotor core 2, rotor bars 5, and end rings 3 and 4.

The rotor core 2 is made of stacked plates made of silicon steel plate in a hollow disk shape having a shaft hole 6 at a central portion into which a rotation shaft is inserted. Around the shaft hole 6 of the rotor core 2, multiple slots 7 into which the rotor bars 5 are inserted are arranged in a peripheral direction.

The rotor bar 5 is a long and narrow rod-shaped body in a circular column shape, in a square column shape, or in a rectangular column shape. The rotor bar 5 is formed by cutting or casting a metal having a high electrical conductivity such as aluminum, aluminum alloy, copper, copper alloy, gold, silver, or platinum. When the squirrel-cage rotor 1 is used for the purpose of a high number of revolutions, a large amount of current is passed through the rotor bars 5. Therefore, the material used for the rotor bar 5 is selected in view of electrical resistance value or mechanical strength. For example, the squirrel-cage rotor 1 for a high number of revolutions mainly uses copper or copper alloy of which electrical resistance is low and of which mechanical strength is high. When the rotor bar 5 is formed of a metallic material having a dispersion material added thereto in accordance with the purpose of use of the squirrel-cage rotor 1, the strength and the thermal expansion rate of the rotor bar 5 can be adjusted. One weight percent of alumina, tungsten, zirconium, and the like is used as the dispersion material for the copper or the copper alloy. Silicon carbide and the like are used as the dispersion material for aluminum or aluminum alloy.

According to an embodiment of the present invention, the rotor bars 5 are formed by cutting and the like in advance, and thereafter, the rotor bars 5 are inserted into the slots 7, but when, e.g., the length of the slot 7 is short (the length of the rotor core 2 is short), the rotor bars 5 may be formed by directly stacking material powder of the rotor bars 5 in the slots 7, using cold spray method, explained later.

The end rings 3 and 4 connect and short-circuit the different ends of the rotor bars 5 inserted into the slots 7 of the rotor core 2. Like the rotor bar 5, the end rings 3 and 4 are formed with a metal having a high electrical conductivity such as aluminum, aluminum alloy, copper, copper alloy, gold, silver, or platinum. The end rings 3 and 4 are formed by so-called "cold spray method", in which the metal material powder in the solid state explained above is blown to the external peripheral portion of the rotor bars 5 at a temperature lower than the melting point of the metal material powder using heated compressed gas. How the end rings 3 and 4 are formed will be explained later in detail.

When the squirrel-cage rotor 1 is used for the purpose of a high number of revolutions, a large amount of current is passed through the end rings 3 and 4. Therefore, the material used for the end rings 3 and 4 is selected in view of electrical resistance value or mechanical strength. For example, a squirrel-cage rotor 1 for a high number of revolutions mainly uses copper or copper alloy of which electrical resistance is low and of which mechanical strength is high. When the end rings 3 and 4 are formed of a metallic material having a dispersion material added thereto in accordance with the purpose of use of the squirrel-cage rotor 1, the strength and the thermal expansion rate of the end rings 3 and 4 can be adjusted. One or less weight percent of alumina, tungsten, zirconium, and the like is used as the dispersion material for the copper or the copper alloy. Silicon carbide and the like are used as the dispersion material for aluminum or aluminum alloy.

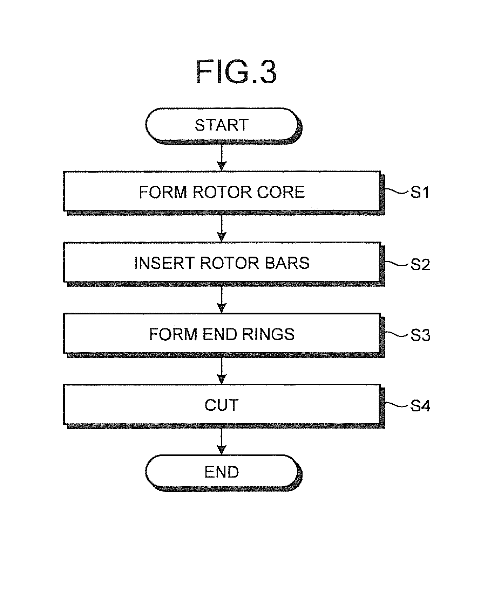

Subsequently, a manufacturing method of the squirrel-cage rotor 1 according to an embodiment of the present invention will be explained with reference to FIGS. 3 to 7. FIG. 3 is a flowchart illustrating a manufacturing method of the squirrel-cage rotor 1 according to an embodiment of the present invention.

As illustrated in the flowchart of FIG. 3, first, stacking plates having the shaft hole 6 are stacked to form the rotor core 2 (step S1). The stacking plates are formed with not only the shaft hole 6 but also holes for the multiple slots 7, and accordingly, the stacking plates are stacked while aligning the positions of the holes for the shaft hole 6 and the slots 7.

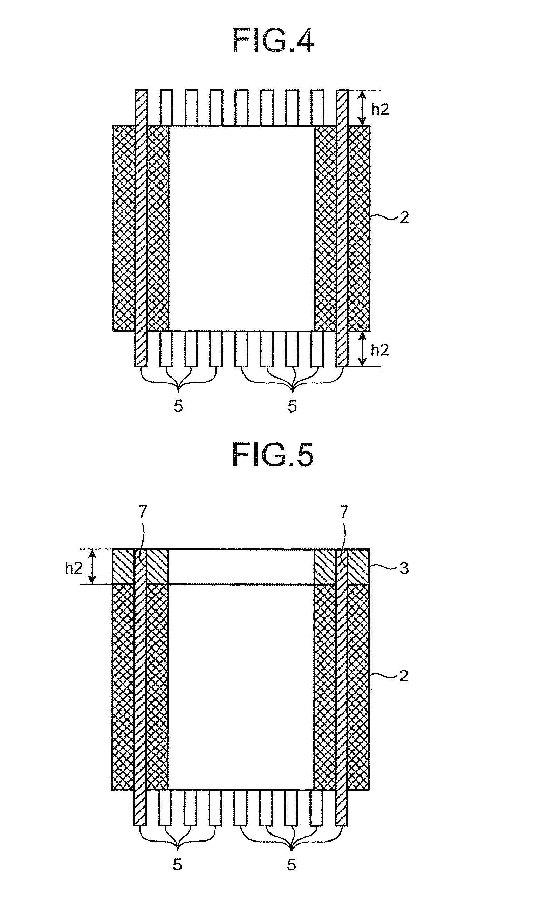

Subsequently, the rotor bars 5 formed with a predetermined material in a predetermined shape in advance are inserted into all the slots 7 (step S2). FIGS. 4 to 6 are cross sectional views illustrating a step of manufacturing the squirrel-cage rotor 1. As illustrated in FIG. 4, in this case, the length by which the rotor bar 5 projects out of the rotor core 2 is uniformly set as a predetermined length h2.

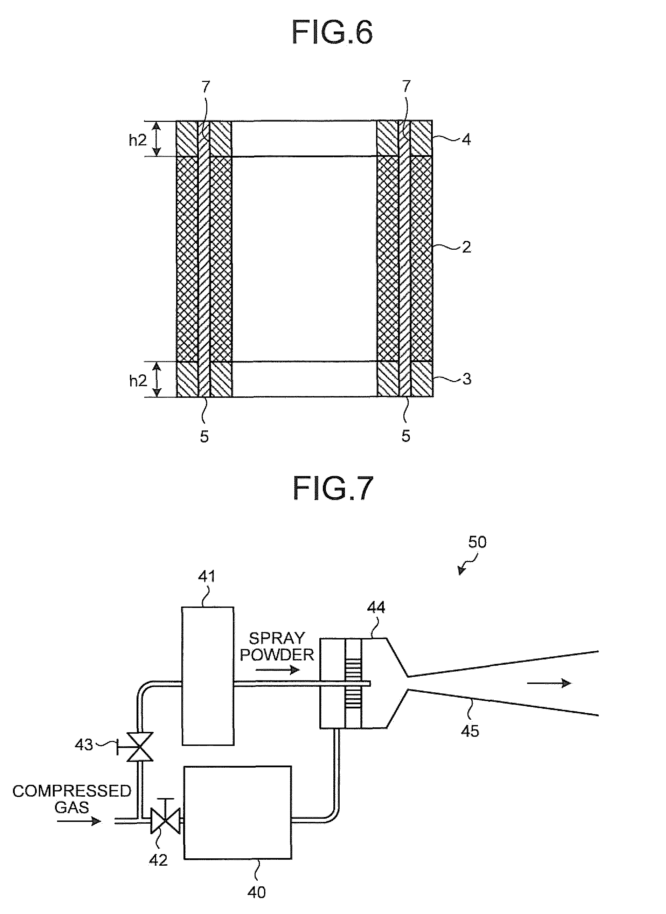

Thereafter, after the shaft hole 6 is masked (not illustrated), the metal powder material of the end rings 3 and 4 is cold-sprayed to the end portions of the rotor core 2, so that the end rings 3 and 4 are formed (step S3). At one of the end portions of the rotor core 2, for example, as illustrated in FIG. 5, the material of the end ring 3 is cold-sprayed, and the end ring 3 is stacked and formed, and thereafter, the rotor core 2 is made in the opposite and fixed, and the shaft hole 6 is masked (not illustrated), and as illustrated in FIG. 6, at the other end portion of the rotor core 2, the material of the end ring 4 is cold-sprayed, so that the end ring 4 is formed.

The cold spray is performed using a thermal spraying device 50 as illustrated in FIG. 7. FIG. 7 is an explanatory diagram illustrating overview of a thermal spraying device used to manufacture the squirrel-cage rotor 1 according to an embodiment of the present invention. The thermal spraying device 50 includes a gas heating device 40 for heating compressed gas, a powder providing device 41 for containing powder material thermally sprayed onto an object and providing a spray gun 44, and a gas nozzle 45 for injecting material powder mixed with compressed gas heated by the spray gun 44 to a base material.

Helium, nitrogen, air, and the like are used as the compressed gas. The provided compressed gas is provided to the gas heating device 40 and the powder providing device 41 with valves 42 and 43, and the compressed gas provided to the gas heating device 40 is heated to, e.g., 50 to 700 degrees Celsius, and thereafter, the compressed gas is provided to the spray gun 44. Preferably, the compressed gas is heated so that the maximum temperature of the spray material powder sprayed onto the base material is maintained at a level equal to or less than the melting point of the metal material. This is because, when the heating temperature of the powder material is maintained at a level equal to or less than the melting point of the metal material, oxidization of the metal material can be suppressed. The compressed gas provided to the powder providing device 41 is provided so that, e.g., the material powder of which particle diameter is about 10 to 100 µm in the powder providing device 41 is provided to the spray gun 44 with a predetermined amount of spray. The heated compressed gas is at a supersonic flow (about 340 m/s or more) by the gas nozzle 45 in a tapered shape. The powder material provided to the spray gun 44 is accelerated when the compressed gas is placed into the supersonic flow, and it collides with the base material at a high speed still in the solid state, so that a cover film is formed. Any device capable of forming the cover film by causing the material powder to collide with the base material in the solid state can be used to manufacture the squirrel-cage rotor 1 according to an embodiment of the present invention, and is not limited to the thermal spraying device 50 of FIG. 7.

According to an embodiment of the present invention, the end rings 3 and 4 are stacked and formed on the entire end surface perpendicular to the axial direction of the rotor core 2, but as long as they have the structure of short-circuiting and connecting all the rotor bars 5, the external diameter of the end rings 3 and 4 may be formed to be less than the external diameter of the rotor core 2, or the internal diameter of the end rings 3 and 4 may be formed to be more than the internal diameter of the rotor core 2.

Subsequently, the upper surface, the external peripheral surface, and the internal peripheral surface of the stacked and formed end rings 3 and 4 are finished into a predetermined shape by cutting, grinding, and the like (step S4). When the height of the end rings 3 and 4 is h1 in the ultimate shape, the height h2 by which the rotor bar 5 projects out of the rotor core 2 is set as a length longer than h1.

As described above, when the end ring 3 and end ring 4 that short-circuit and connect the rotor bars 5 are formed by cold spray method, the used material is hardly oxidized, and the quality thereof hardly changes with heat, and the fine end rings with a high degree of contact strength can be formed. When the end ring 3 and end ring 4 and the rotor bar 5 are bonded with the cold spray method, it takes much less time to bond them as compared with welding or brazing. Further, this can solve reduction of the strength and electrical failure that occurs due to the heat and sink marks made during welding and brazing, and moreover, there is an effect of solving casting failure that occurs due to, e.g., air inclusion and internal gases during casting.

In recent years, high-speed rotation rotors using copper or copper alloy for the rotor bars and the end rings are manufactured, but the copper or the copper alloy have high melting points, and therefore, it is difficult to integrally form the rotor bars and end rings with casting. According to the present invention, the squirrel-cage rotor having the rotor bars and the end rings made of the copper or the copper alloy can be manufactured in a short time without reducing the strength that occurs during bonding and the casting failure.

Further, conventionally, when a squirrel-cage rotor is manufactured according to an assembly method by casting, welding, or brazing, the rotor bars and the end rings are made of the same material, but the end rings may be formed by the cold spray method, and different materials may be used. In this case, the material constituting the end rings can be selected without any limitation such as bonding, and the squirrel-cage rotor can be manufactured.

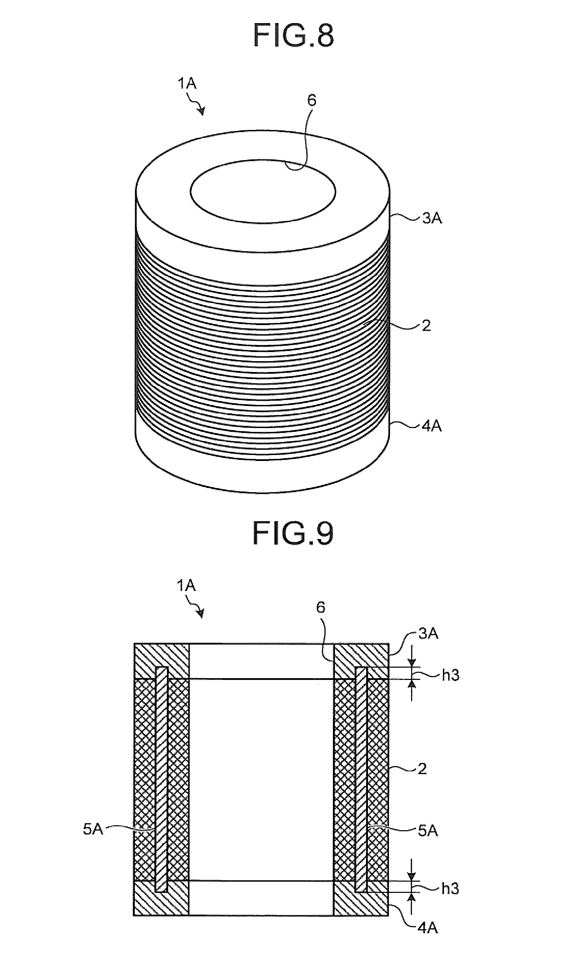

A squirrel-cage rotor 1A as illustrated in FIG. 8 is illustrated as an example of a squirrel-cage rotor according to a modification of an embodiment of the present invention. FIG. 8 is a perspective view illustrating a configuration of the squirrel-cage rotor 1A according to a first modification of an embodiment of the present invention. FIG. 9 is a longitudinal cross-sectional view illustrating the squirrel-cage rotor 1 of FIG. 8. In the squirrel-cage rotor 1A, rotor bars 5A are not exposed on the upper surfaces of end rings 3A and 4A.

As illustrated in FIG. 9, the rotor bar 5A inserted into the slot is configured to have a length h3, at which the rotor bar 5 slightly protrudes from the rotor core 2. The length h3 is preferably shorter as long as they are short-circuited and brought into conduction by the end rings 3A and 4A thereafter stacked and formed by the cold spray method.

When the squirrel-cage rotor 1A according to the first modification is manufactured, the rotor core 2 is formed by stacking the stacking plates having the shaft hole 6, and the rotor bars 5A formed with a predetermined material in a predetermined shape in advance are inserted into all the slots 7. Subsequently, the portion of the shaft hole 6 is masked, and the metal powder material of the end ring 3A is cold-sprayed from the upper side of the rotor bars 5A using the thermal spraying device 50 as illustrated in FIG. 7, so that the end ring 3A is formed. The end ring 3A is formed by cold-spraying from the above without masking the portions of the rotor bars 5A, and the end ring 3A can be formed more easily. The end ring 4A is formed in the same manner, and the upper surface, the external peripheral surface, and internal peripheral surface of the end rings 3A and 4A stacked formed are made into a predetermined shape by, e.g., cutting and grinding, so that the squirrel-cage rotor 1A is formed.

Like the squirrel-cage rotor according to an embodiment of the present invention, the squirrel-cage rotor 1A according to the first modification is made by bonding the end ring 3A and the end ring 4A with the rotor bars 5A by the cold spray method, and therefore, it takes much less time to bond them as compared with welding and brazing. Further, this can solve reduction of the strength and electrical failure that occurs due to the heat and sink marks made during welding and brazing, and moreover, there is an effect of solving casting failure that occurs due to, e.g., air inclusion and internal gases during casting. According to this first modification, the configuration of the mask portion during cold spray is easy, and therefore, the end rings 3A and 4A can be formed more easily.

### Industrial Applicability

The present invention can be used for a squirrel-cage rotor and a manufacturing method thereof, and in particular, the present invention is useful for a high-speed squirrel-cage rotor.

### Reference Signs List

| | |
|---|---|
| 1, 1A | squirrel-cage rotor |
| 2 | rotor core |
| 3, 3A, 4, 4A | end ring |
| 5, 5A | rotor bar |
| 6 | shaft hole |
| 7 | slot |
| 40 | gas heating device |
| 41 | powder providing device |
| 42, 43 | valve |
| 44 | spray gun |
| 45 | gas nozzle |
| 50 | thermal spraying device |

## Claims

1. A squirrel-cage rotor comprising:
a rotor core made by stacking a plurality of cores made of steel plates and having a plurality of slots extending in parallel to each other;
a plurality of rotor bars respectively inserted into the plurality of slots, the rotor bars being made of metal and having lengths longer than the lengths of the slots inserted; and
two end rings respectively provided at end portions of the rotor core and both end portions in a direction in which the plurality of slots extend, the two end rings short-circuiting the plurality of rotor bars,
wherein the end rings are formed by blowing, to the end portions, metal material powder in a solid state constituting the end rings at a temperature lower than a melting point of the metal material powder using heated compressed gas.

2. The squirrel-cage rotor according to claim 1, wherein the end portions of the plurality of rotor bars are buried in an inside of the end rings.

3. The squirrel-cage rotor according to claim 1 or 2, wherein the end rings are made of aluminum, aluminum alloy, copper, or copper alloy.

4. The squirrel-cage rotor according to claim 3, wherein the end rings are made of copper or copper alloy including alumina, tungsten, or zirconium as a dispersion material.

5. A manufacturing method for a squirrel-cage rotor comprising a rotor core made by stacking a plurality of cores made of steel plates and having a plurality of slots extending in parallel to each other, a plurality of rotor bars respectively inserted into the plurality of slots, the rotor bars being made of metal and having lengths longer than the lengths of the slots inserted, and two end rings respectively provided at end portions of the rotor core and both end portions in a direction in which the plurality of slots extend, the two end rings short-circuiting the plurality of rotor bars,
wherein the end rings are formed by blowing, to the end portions, metal material powder in a solid state constituting the end rings at a temperature lower than a melting point of the metal material powder using heated compressed gas.

6. The manufacturing method for the squirrel-cage rotor according to claim 5, wherein the end rings are formed by blowing, to the end portions of the rotor core, the metal material powder in the solid state constituting the end rings at a temperature lower than the melting point of the metal material powder using heated compressed gas, so that the end portions of the plurality of rotor bars are buried.
